# NEW EUROPEAN PATENT SPECIFICATION

(11) **EP 0 452 727 B2**
(45) Date of publication and mention of the opposition decision: **11.12.2002**
(45) Mention of the grant of the patent: 13.03.1996
(21) Application number: 91105036.7
(22) Date of filing: 28.03.1991
(51) Int. Cl.: D04H 13/00

(54) **Laminate material having stretch and recovery process for forming and use of same**
Streckfähiger Verbundstoff und Verfahren mit Deckeigenschaften und seine Anwendung
Matériau composite extensible, et procédé de formation pour le recouvrement et son utilisation

(30) Priority: 30.03.1990 US 502098
(43) Date of publication of application: 23.10.1991
(73) Proprietor: KIMBERLY-CLARK WORLDWIDE, INC., Neenah, Wisconsin 54956 (US)
(72) Inventor: Strack, David C., Canton, GA 30114 (US); Shultz, Jay S., Roswell, GA, 30076 (US)
(74) Representative: Diehl, Hermann O. Th., Dr.

(56) References cited:
- EP-A- 0 053 188
- EP-A- 0 217 032
- EP-A- 0 239 080
- EP-A- 0 333 212
- EP-A- 0 341 875
- AU-A- 7 049 587
- DE-A- 3 824 983
- US-A- 3 904 455
- US-A- 4 522 863

## Description

The present invention is concerned with a laminate material having stretch and recovery, a method of making such laminate material and articles made therefrom.

Various textile materials, such as knits and woven materials, can be stretched, but have relatively poor recovery (that is, do not recover their original size and shape after stretching). Since there is not much retraction force in the recovery, these fabrics (e.g., knitted fabrics) tend to lose their original size and shape.

It has been desired to provide a textile material which is not only stretchable, but also has recovery characteristics. It is also desired to achieve such material which is stretchable and has recovery characteristics, as well as having other properties (such as breathability, puncture resistance, etc.) which permit the material to be used for making protective covering pads and wearing apparel. It is further desired to provide such material, having stretch and recovery characteristics, wherein in the unstretched state the material is not puckered (that is, does not have gathered portions; i.e., that is flat).

Elastic textile fabrics have previously been provided. Thus, U.S. Patent No. 2,184,772 to Vamos discloses an elastic textile fabric, having a limited stretch and recovery, utilizing textile material in which the weft threads are formed of elastic yam. The elastic weft threads return the material to its original dimensions after it has been stretched. This patent further discloses a laminated textile material including a layer of elastic textile fabric as discussed above, a layer of biased textile fabric and an intermediate layer of elastic or rubber cement by which the two outer layers are laminated. This patent discloses that since the elastic textile fabric is cemented to the biased fabric by an elastic cement, the laminated fabric will retu m to its original size and shape after its stretching, due to the elasticity of the elastic textile fabric.

While this patent discloses a textile fabric having recovery characteristics due to use of an elastic fabric, the disclosed elastic fabric is another textile material, engineered using elastic yarns. These materials do not provide lightweight capabilities, and also cause problems in connection with processing, these elastic yams being very difficult to process on knitting and weaving equipment due to their stretchiness and relatively high coefficient of friction.

U.S. Patent No. 3,497,415 to Adachi discloses a composite fabric in which a first knitted acrylonitrile fabric having two faces and being of relatively high elasticity is bonded to a second fabric which is a knitted rayon fabric also having two faces but having relatively no elasticity, the bonding being by means of an adhesive.

While disclosing a stretch knit material, problems also arise with the structure disclosed in U.S. Patent No. 3,497,415, in connection with providing a lightweight product and in processing of the knit, relatively high elasticity fabric.

U.S. Patent No. 3,904,455 to Goldman teaches a laminated fabric including a woven or knitted web of textile fibers reinforced by a backing directly united thereto, of a spunbond nonwoven web. This patent discloses that the knitted or woven fabric can have pattern effects desirable in upholstery fabrics; and that the spunbond nonwoven web can be formed of a material such as styrene, butadiene, polyisoprene, natural rubber, butadiene acrylonitrile, acrylic, vinyl chloride, vinyl acetate, vinyl alcohol, polyurethane, and polyester, among other materials.

This U.S. Patent No. 3,904,455 is directed to textile nonwoven laminations; however, stretch recovery is not an objective, nor does this patent focus on elastomeric materials for the spunbond nonwoven web.

U.S. Patent No. 4,438,172 and EP-A-53 188, both to Katsutoshi, et al., disclose a heat retaining sheet, useful for batting or interlining in, e.g., clothing, the sheet consisting of webs in which fibers containing polybutylene terephthalate as at least one of the components and having a substantially unstretched definite fiber length are mutually bonded, the area shrinkage when treated with boiling water being up to about 20%. These patents further disclose an elastic heat retaining sheet which is soft and rich in flexibility, and has a high stretch recovery ratio. The elastic heat retaining sheet includes a nonwoven web which is formed by forming thin webs of elastic fibers independent of, and separate from, one another, the elastic fibers consisting of a polyether ester type copolymer containing at least polybutylene terephthalate as a hard segment and having a substantially undrawn definite fiber length; with the thin webs being layered like scales to form the nonwoven web. These patents go on to state that the nonwoven web can be bonded to a woven fabric by a low-melting powder.

Japanese patent document 62-121,045 discloses a stretchable garment material for sportswear, including polyurethane elastic nonwoven and knit fabrics and polyurethane elastic film integrated with an intermediate fabric layer. As a specific example, the polyurethane elastic nonwoven fabric is press-laminated with a knit fabric, with the polyurethane film being laminated with an adhesive on the knit fabric surface.

Japanese Patent document No. 59-223347 discloses polyurethane elastic fibrous nonwoven cloth and methods of preparing such cloth. In one specific example, it is disclosed that the polyurethane is manufactured into an elastic web by using a molten blow spinning device having injection slits for hot gas at both sides of extrusion nozzles for the polymer. After forming fine-form filaments using the molten blow spinning device, the filaments are collected on a conveyor and taken down between rollers to produce a nonwoven cloth; this nonwoven cloth showed lamination of open monofilaments of polyurethane elastic fiber, with the intersecting points among filaments being joined by melt adhesion. This patent document further discloses that the nonwoven cloth made of polyurethane elastic fibers, as disclosed in the document, may be utilized as it is, but also can be used in combination with other materials, including woven goods, mesh, nonwoven cloth, or web made of inelastic polymers, for example, synthetic fibers, such as polyester, nylon, polyolefin, acryl or woven goods from natural fibers, such as cellulose or wool.

While disclosing nonwoven polyurethane elastomeric webs, formed, e.g., using a molten blow spinning device, and also disclosing combinations of nonwoven polyurethane elastic webs with woven material, this patent document does not teach formation of textile articles wherein the, e.g., knit or woven web is flat (non-gathered). Moreover, this patent document does not focus on providing knit, woven or scrim webs having good stretch and recovery characteristics.

Notwithstanding all of the structures disclosed in the foregoing, it is still desired to provide a textile article having good stretch and high recovery characteristics, with one of the faces of the material being of a knit, woven or scrim, the face being flat (non-gathered) and having other characteristics such as breathability, water repellency and puncture resistance.

U.S. Patent No. 4,720,415 to Vander Wielen, et al., the contents of which are incorporated herein by reference in their entirety, discloses a composite elastic material of a gatherable web joined to at least one elastic web at spaced-apart locations, in which the gatherable web is gathered (e.g., puckered or non-flat) between the spaced-apart locations when the composite elastic material is in an unstretched condition.

U.S. Patent No 4,801,482 to Goggans, et al., the contents of which, including the definitions therein, are incorporated herein in their entirety by reference, discloses an elastic pad which is elastic in at least one direction, the pad being a composite including an elastic nonwoven web and at least one nonelastic web joined to the elastic nonwoven web, with the nonelastic web being gathered between areas in which the nonelastic web is bonded (joined) to the elastic nonwoven web.

U.S. Patent No. 4,720,415 discloses composite elastic materials having stretch and recovery characteristics. However, the disclosed materials do not have a flat textile web when stretching of the elastic web is terminated. Rather, the disclosed materials have gathers in the gatherable web when the elastic web is not subjected to stretching. Similarly, the various products (including mattress pads and table pads) disclosed in U.S. Patent No. 4,801,482 include a composite having a gathered web upon release of stretching of the elastic web; specifically, the patent discloses a bulky laminate.

Thus, there still remains a need to provide a textile material having stretch and good recovery characteristics, yet which provides a flat surface, and has other desirable properties such as breathability, opacity, puncture resistance, etc.

This object is solved by the laminate material of independent claims 1, the process for making same according to independent claim 23, and the use of such laminate material according to independent claim 33. Further features and aspects of the present invention will become evident from the dependent claims, the description, examples and drawings. The invention provides laminate material having stretch and recovery process for forming and use of same, and it is directed to a laminate material of (1) a first web of a knit, woven, or scrim material (that is, a textile material), together with (2) a bonded non woven elastomeric web, to provide a laminate with stretch and recovery; a method of making such laminate, and articles made therefrom.

Accordingly, it is an aspect of the present invention to provide a laminate textile material, having a knit, woven or scrim web and having stretch and recovery characteristics in all directions (limited, of course, by the inherent stretch limits of the starting textile material), which laminate textile material is flat, and a method of making such laminate textile material.

It is a further aspect of the present invention to provide a textile material having a knit or woven web, and having stretch and recovery characteristics, but without the need to include elastomeric yarn in the knit or woven structure, and without the need for elastomeric films.

It is a still further aspect of the present invention to provide a textile material having a knit or woven web, and with good barrier properties including puncture resistance, insulation, filtration, opacity and liquid repellency.

It is a still further aspect of the present invention to provide fitted pads, such as table pads and mattress pads, and upholstery, made of a textile material including a knit, woven or scrim web, the pads having stretch and recovery characteristics, which pads can protect the underlying article from dirt infiltration and is opaque, while being breathable to avoid condensation beneath the pad or upholstery.

It is a still further aspect of the present invention to provide wearing apparel including a knit, woven or scrim web, having stretch and recovery characteristics, which has thermal insulation properties and a dirt barrier, and has opacity, which wearing apparel has breathability.

In order to achieve one or more of the foregoing aspects, the present invention provides a laminate of (1) a first web of a knit, woven or scrim material, and (2) a bonded nonwoven elastomeric web, with the first web, when the nonwoven elastomeric web is in an unstretched state, being flat (that is, the first web is non-gathered or non-puckered).

In stating that the first web is flat after lamination, we mean that the knit web, woven web or scrim web, as part of the lamination, is not gathered when the bonded nonwoven elastomeric web is unstretched, after the bonding between the webs has been performed. The gathering of a web attached to a nonwoven elastomeric web is described in U.S. Patent No. 4,720,415, the contents of which have been incorporated herein by reference in their entirety. Thus, the present product differs substantially from that in U.S. Patent No. 4,720,415.

According to the present invention, after bonding the laminate material can be stretched as much as the knit, woven or scrim web can be stretched, with the nonwoven elastomeric web providing power recovery (retraction force) upon relaxation of the stretching of the laminate.

The laminate according to the present invention includes at least two webs, (that is, two webs or more than two webs can be included). If more than two webs are used, the bonded nonwoven elastomeric web can be an inner web of a sandwich of three webs, with the two outer webs, for example, being knit or woven or scrim webs. In this instance, the bonded nonwoven elastomeric web would be buried.

On the other hand, the bonded nonwoven elastomeric web can be exposed in the laminate material.

The bonded nonwoven elastomeric web can be, for example, a spunbond web or a web of meltblown fibers. Desirably, the nonwoven elastomeric web is made of meltblown elastomeric fibers. Various known materials for forming meltblown elastomeric fibers, such a copolyetheresters; copolymers of ethylene and at least one vinyl monomer (e.g., ethylene vinyl acetate); A-B-A' block copolymers, wherein A and A' may be the same or different end blocks and each is a thermoplastic polymer end block or segment which contains a styrenic moiety such as polystyrene or polystyrene homologs, and B is an elastomeric polymer midblock or segment, segmented block copolymers, of two alternating segments, having the formula A-B (e.g., block copolymers having alternating segments of polyamide and polyether block copolymers commercially available from ATOCHEM Polymers of Glen Rock, N.J., under the trade name PEBAX); and a urethane polymer (e.g., polyurethane or a urethane copolymer), can be used in the present invention for the bonded nonwoven elastomeric web. As to various elastomeric polymers which can be utilized, and, moreover, techniques for forming meltblown elastomeric fibers and nonwoven webs of these meltblown fibers, attention is directed to the specific meltblown materials described in U.S. Patent No. 4,720,415 and No. 4,801,482 (the contents of each of which have previously been incorporated herein by reference in their entirety); and U.S. Patent No. 4,707,398 to Boggs and No. 4,741,949 to Morman, et al., the contents of each of which are incorporated herein by reference in their entirety. Various other elastomeric materials have been formed into meltblown elastomeric webs, and each falls within the contemplation of nonwoven elastomeric webs for the present invention.

The nonwoven elastomeric web, useful in the present invention, is a bonded material. Specifically, bonding of the nonwoven elastomeric material can enhance abrasion resistance; such bonding can be achieved thermally, for example. Illustratively (but not limiting), the nonwoven elastomeric web can be thermally point bonded.

Stretch recovery of the bonded nonwoven elastomeric web is important in connection with the present invention, since the degree of recovery of the bonded nonwoven elastomeric web will control the degree of recovery in the laminate (the stretch of the laminate being controlled by the degree of stretch of the knit or woven or scrim web of the laminate).

It is desirable that the bonded nonwoven elastomeric web have omni-directional stretch and recovery, so as to deliver power recovery to whatever cloth is used. Thus, utilizing a bonded nonwoven elastomeric web having omni-directional stretch and recovery, if the knit web of the laminate stretches in the machine direction (MD) then the laminate will have power recovery in the MD. If the knit web stretches in all directions, then the laminate will have power recovery in all directions.

A unique aspect of woven materials is that they stretch mostly in the bias (e.g., 45° off the machine direction (MD) or cross direction (CD). Using a bonded nonwoven elastomeric web having omni-directional stretch and recovery, recovery is also provided in the bias direction.

The bonded nonwoven elastomeric web is bonded to a knit web, or a woven web or scrim web, e.g., a nonelastic textile web, according to the present invention. These knit webs, woven webs and scrim webs are known in the art; conventional webs (textile webs, such as a nonelastic textile web) can be used for the present invention. These knit webs, woven webs and scrim webs can be formed as done conventionally.

Knitted fabrics generally have good stretch but relatively poor recovery. Since there is not much retraction force in the recovery, these knitted fabrics tend to lose their shape. However, a laminate according to the present invention, utilizing a bonded nonwoven elastomeric web as discussed above, imparts recovery to the knit. In addition, particularly when utilizing an elastic meltblown for the bonded nonwoven elastomeric web, the laminate material has unique z- direction impact and puncture resistance. Moreover, by using the bonded nonwoven elastomeric web, the durability of the knit fabric is enhanced because the yams are locked onto the elastomeric surface (e.g., elastomeric meltblown surface) and are not subject to the same level of yarn-to-yarn abrasion and stresses that the free knit structure would experience. In addition, knits backed or laminated with the bonded nonwoven elastomeric web (e.g., an elastomeric meltblown web) become snag and run resistant because the yams are immobilized on the elastomeric meltblown surface. Thus, the use of the bonded nonwoven elastomeric web, particularly an elastomeric meltblown web, provides power recovery to prevent bagging and sagging; provides puncture resistance, particle filtration and liquid penetration resistance; and also provides an anti-skid (relatively high friction) surface.

The foregoing characteristics of the laminate material are particularly desirable upon using the laminate material as a cover (e.g., a protective cover, such as a slipcover or fitted pad. In particular, having a knit facing outside during use, a fashionable fabric with good surface wear abrasion resistance is realized. Furthermore, the cover is kept in place due to the relatively high friction surface of the bonded nonwoven elastomeric web.

In addition to use of a knit web in combination with the bonded nonwoven elastomeric web, according to the present invention, a woven or scrim web can be used. While woven and scrim webs have more dimensional stability than knits, especially in the machine and cross direction, power recovery is added to these materials to the extent that they stretch. Of particular interest is the bias stretch of, e.g., woven webs. The laminate of the present invention, using a nonwoven elastomeric web together with the woven web, provides a stretch recovery in the bias.

As with knits, the woven or laid scrim yarns are stabilized in their original structure, reducing yam against yam wearing, when the woven or scrim webs are laminated with the bonded nonwoven elastomeric web according to the present invention. Stabilization of laid scrim webs is particularly useful, since the nonwoven scrims have poor dimensional stability to begin with. As with knit laminates, the z-directional puncture and impact resistance of the woven and scrim laminate is improved in he structure of the present invention, as compared with using a woven or scrim web by itself.

The bonded nonwoven elastomeric web can be adhesively bonded to the web of knit, woven or scrim material by various known means. The most important factor is that the bonded nonwoven elastomeric web be unstretched during bonding to the first web; or, alternatively, that any stretching of the bonded nonwoven elastomeric web during bonding be sufficiently little such that when the bonded nonwoven elastomeric web is relaxed to its unstretched state after bonding, there is no gathering or puckering of the first web.

The laminate textile material according to the present invention has various uses, including for wearing apparel and as coverings for various articles (e.g., table pads, mattress pads, upholstery (including slip covers), etc.). Moreover, the laminate materials according to the present invention can be useful as fabric design coordinates with stretch-bonded laminate fabrics, in apparel and other applications.

Accordingly, the objectives as discussed above are achieved by the present invention. Specifically, the present laminate textile materials have power recovery in all directions, although the degree of stretch is limited by the inherent stretch of the starting textile (knit or woven or scrim). Furthermore, the bonded nonwoven elastomeric web component (particularly when such component is a web of meltblown elastomeric fibers) tightens the textile structure providing barrier properties and closing holes between the yarns of the, e.g., woven or knit web. These barrier properties include puncture resistance, insulation, filtration, opacity and liquid repellency.

Moreover, according to the present invention the bonded nowoven elastomeric web may be buried in the textile structure (e.g., sandwiched between two webs of textile material such as knit material), whereby any undesirable feel of the bonded nonwoven elastomeric web may be avoided by a simple processing technique. In this regard, with conventional structures, using, e.g., spandex yarns, an expensive core wrapping procedure is performed to overcome the poor coverage and tactile aesthetics of such yarn; such core wrapping procedure is unnecessary in the present invention.

In addition, the present invention can provide a laminate textile material having stretch and recovery characteristics, as well as other properties as discussed above, in a relatively simple and inexpensive procedure. Such procedure according to the invention is clearly preferable to the present technique for forming textile fabrics, incorporated spandex or rubber yams into the knitted or woven structure; such spandex or rubber yarns are very difficult to process on knitting and weaving equipment due to their stretchiness and relatively high coefficient of friction, and relatively high costs of equipment set-up.

Fig. 1 schematically illustrates the formation of a two-web laminate according to the present invention.

Fig. 2 schematically illustrates a first embodiment of forming a three-web laminate according to the present invention.

Fig: 3 schematically illustrates a second embodiment for forming a three-web laminate according to the present invention.

Fig. 4 schematically illustrates formation of a five-web laminate according to the present invention.

While the invention will be described in connection with specific and preferred embodiments, it will be understood that it is not intended to limit the invention to those embodiments. To the contrary, it is intended to cover all alterations, modifications and equivalents as may be included within the scope of the invention as defined by the appended claims.

The present invention contemplates a laminate material including a textile web, such as a web of knit material, or woven material, or scrim having stretch and recovery characteristics, achieved by laminating the textile web to a bonded nonwoven elastomeric web (desirably, a web of elastomeric meltblown fibers). The laminated structure is flat (i.e., non-gathered) by bonding the textile web to the bonded nonwoven elastomeric web with the bonded nonwoven elastomeric web in a non-stretched state (or so little stretched that, upon relaxation of the stretch, the textile web does not gather).

As set forth previously, the bonded nonwoven elastomeric material is desirably a meltblown material. The fibers in the bonded nonwoven elastomeric web illustratively range from 0.5 to 100 µm in diameter. However, if barrier properties are important in the finished laminate (for example, it is important that the final laminate material have increased opacity and/or insulation and or dirt protection and/or liquid repellency) then finer fibers, in the 0.5-20 µm range, are preferred.

The bonded nonwoven elastomeric web may be a bonded nonwoven elastomeric composite web. Illustratively, such composite web can be made of a mixture of two or more kinds of different fibers or a mixture of fibers and particulates. Such mixtures may be formed by adding fibers and/or particulates to the gas stream in which elastomeric meltblown fibers are carried so that an intimate entangled commingling of the elastomeric meltblown fibers and other materials occurs prior to collection of the meltblown fibers upon a collection device to form a coherent web of randomly dispersed meltblown fibers and other materials, such as disclosed in U.S. Patent Nos. 4,100,324 and 4,803,117, the contents of each of which are incorporated herein by reference in their entirety. Useful materials which may be used in such nonwoven elastomeric composite webs include, for example, wood pulp fibers, staple length fibers from natural and synthetic sources (e.g., cotton, wool, asbestos, rayon, polyester, polyamide and the like), non-elastic meltblown fibers, and particulates such as, for example, activated carbon particulates or hydrocolloid (hydrogel) particulates commonly referred to as superabsorbents. Other types of bonded nonwoven elastomeric composite webs may be used. For example, a hydraulically entangled bonded nonwoven elastomeric composite web may be used such as disclosed in U.S. Patent No. 4,879,170 to Radwanski, et al., and U.S. application Serial No. 07/170,209 to Radwanski, et al., the contents of which are incorporated herein by reference in their entirety.

The basis weight of the bonded nonwoven elastomeric web may illustratively range from 6.782 to 203.46 g/m² (0.20 to 6.0 oz/yd²). The basis weight is selected to provide desired laminate properties, including recovery and barrier properties. The more preferred basis weight for the nonwoven elastomeric web is from 10.173-101.73 g/m² (0.3-3.0 oz/yd²).

As indicated previously, any suitable method of adhesive bonding may be used for joining the webs in forming the laminate materials of the present invention. Adhesive bonding may be in discrete points, continuous lines or overall (that is, over 100% of the surface between the textile web and the bonded nonwoven elastomeric web). The bonding may be patterned. An adhesive may be pre-applied to the bonded nonwoven elastomeric web and/or to the textile material; such adhesive may be heat activated to achieve lamination. Moreover, aqueous adhesives, or solvent-based adhesives, known in the art, may be used. An adhesive web can be interposed between the textile material and the bonded nonwoven elastomeric web, to provide the bonding.

An important factor for the adhesive is that it not interfere with the elasticity (e.g., recoverability) of the laminate. Thus, if an adhesive or adhesive web is used to provide bonding over 100% of the area between the textile web and the bonded nonwoven elastomeric web, then the adhesive or adhesive web must also be elastomeric.

As seen in all of the foregoing, various conventional techniques for affixing the textile web and the bonded nonwoven elastomeric web to each other can be utilized in the present invention. The main criteria is that a laminate be formed wherein elasticity of the bonded nonwoven elastomeric web is assured, so as to ensure the necessary stretch recovery characteristics of the present invention. Of course, the lamination process must provide a bonding that will withstand the intended end use of the material.

Illustratively, the bonding temperature for laminating the webs can range from ambient temperature to 260°C (500°F.), the optimum temperature range being dependent on the webs used, and the adhesive used. Using liquid adhesives could allow ambient bonding temperatures, with actual temperatures being dependent on the adhesive used and the melting temperatures of the involved webs.

The bonding can be performed in a continuous manner, with bonding accomplished between a pair of bonding rolls. Illustratively, when bonding between bonding rolls, the webs to be laminated can be passed between the rolls at a speed of from 10.16 mm/s to 5.08 m/s (2 feet per minute to 1,000 feet per minute). Actual web speed limits are determined by the adhesive system used, as well as the temperature during the bonding and pressure applied by the rolls during bonding. Increasing the web speed decreases the dwell time while bonding, accordingly, additional heat and/or pressure is required at elevated line speeds. The bonding pressure can range from 6.895-413.686 kPa (1-60 PSI) in two 10.16 cm (4-inch) diaphragms applying pressure onto a 35.56 cm (14-inch) wide roll that is 17.78 cm (7-inches) in diameter (as one of the two bonding rolls).

Diaphragm pressure is a measure of the bonding pressure, as seen in the following. Thus, diaphragms are provided on either side of one of the two bonding rolls. Pressure applied to the diaphragm is applied to the bonding roll, such that pressure is applied to the webs between the rolls.

In the following paragraphs, various lamination processes according to the present invention will be discussed, with respect to the Figures. As can be appreciated, the disclosed processes are merely illustrative of the present invention, and are not limiting.

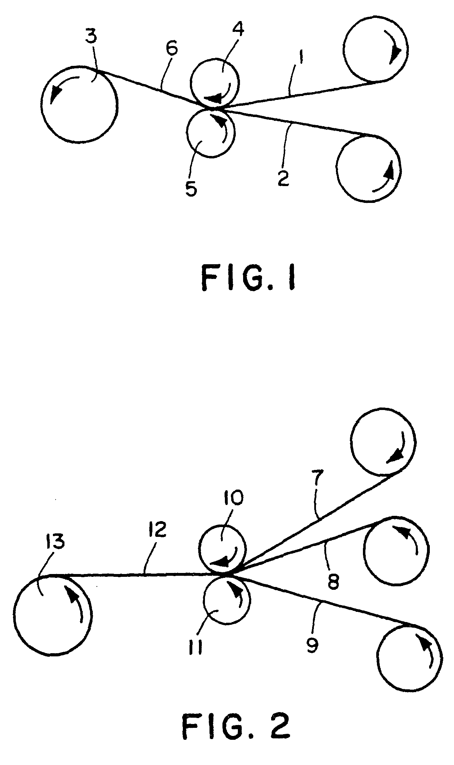

Fig. 1 shows a process for forming a two-web laminate according to the present invention. A textile web (a web of knit or of woven or of scrim material) 1 and a bonded nonwoven elastomeric web 2 are fed between bonding rolls 4, 5 using an unwind device to control the web tension and draw ratio, as known in the art. As the two webs pass through the bonding rolls they are subjected to heat and pressure as follows:
Textile side roll: 101.11°C (214° F)
Elastomeric side roll: 42.77°C (109° F)
Web speed: 50.83 mm/s (10 feet per minute)
Diaphragm pressure: 275.79 kPa (40 pounds per inch²)

The two webs are bonded to each other as they pass through the bonding rolls, thereby forming a laminate. The web 6 coming out of the bonding rolls is transferred to a take-up roll 3 that winds the laminate material with the desired web tension and draw ratio.

Fig. 2 shows a first embodiment of forming a three-web laminate. In Fig. 2, webs 7, 8 and 9 respectively are unrolled and positioned adjacent each other, and the combination of webs 7-9 pass between the bonding rolls 10 and 11.

The middle web (represented by the reference character 8 in Fig. 2) is an adhesive nonwoven web, with the webs 7 and 9 respectively being a bonded nonwoven elastomeric web and a textile web. In this alternative, the adhesive nonwoven web would act to bond the bonded nonwoven elastomeric web and textile web to each other. This alternative was used to produce the three-web laminates of Examples 1-3 utilizing the general procedures and the processing parameters described in the foregoing paragraphs.

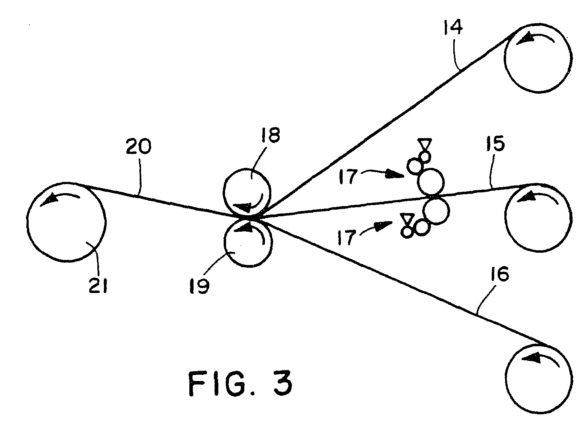

Fig. 3 shows a second embodiment of forming a three-web laminate according to the present invention, using an adhesive to provide the bonding for the lamination. In particular, reference characters 14-16 represent three webs to be laminated. Both of webs 14 and 16 are either a textile web or a bonded nonwoven elastomeric web, while web 15 is the other of the textile or bonded nonwoven elastomeric web. Reference character 17 represents an adhesive applicator, known in the art, which deposits an adhesive on both the top and bottom surfaces of the middle web 15. After the adhesive has been applied, web 15 is combined with webs 14 and 16 and passed between the bonding rolls 18 and 19, where bonding occurs. The adhesive used can be any suitable adhesive (liquid or thermoplastic), and can include aqueous or solvent based adhesives, as well as fusible coatings. The adhesive can be applied overall or in a pattern.

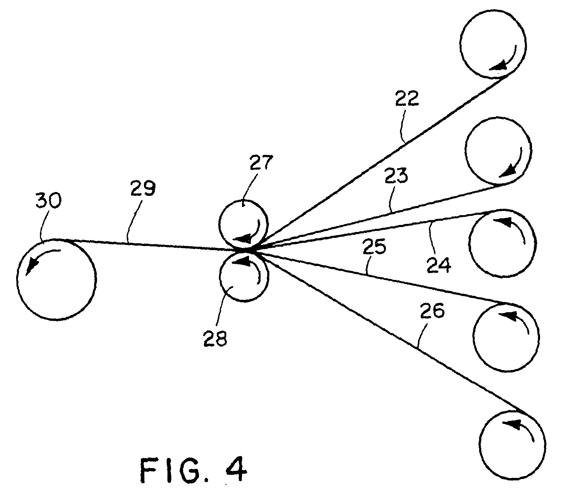

Fig. 4 schematically illustrates formation of a five-web laminate. Of the initial webs, both of webs 22 and 26 are either textile webs or bonded nonwoven elastomeric webs, while web 24 is the other of the textile web or bonded nonwoven elastomeric web not used for webs 22 and 26. Webs 23 and 25 are nonwoven adhesive webs. In operation, the webs are unwound to be adjacent to each other and passed through bonding rolls 27 and 28, where the webs are bounded together, forming the laminate material 29. Such laminate material 29 is wound on the take-up roll 30.

As can be seen in the foregoing, any number of webs can be laminated, to form a laminate material according to the present invention, and either the textile web or the bonded nonwoven elastomeric web, or both, can be exposed in the laminate product.

As indicated previously, the laminate material of the present invention has various textile applications. Illustratively (and not limiting), the laminate material can be used to form fitted pads, such as mattress pads and table pads; upholstery, particularly form-fitting upholstery for articles of furniture (chairs, etc.) and slipcovers, as well as covers for walls and partition panels; and wearing apparel. All of these products take advantage of the recovery characteristics of the laminates according to the present invention.

In particular, the laminate web according to the present invention has particular applicability where the bonded nonwoven elastomeric web is formed of meltblown elastomeric fibers. In using meltblown elastomeric webs, for the products as discussed above, the breathable barrier of the meltblown elastomeric component can be effectively utilized.

The following advantages are achieved using the laminate material of the present invention for the products as discussed in the foregoing. Thus, using the laminate material for fitted pads and upholstery, the mattress, chair, etc., can be protected from dirt filtration, while such laminate material has breathability to prevent destructive condensation beneath the cover. Moreover, the covered item can be hidden, utilizing the opacity of the present laminate material.

Moreover, atwo-web laminate in fitted covers and upholstery, with the bonded nonwoven elastomeric web (e.g., elastomeric meltblown) against the article covered, provides an anti-slip cover based on the inherently high coefficient of friction of the nonwoven elastomeric.

When the laminate material according to the present invention is used in wearing apparel, the apparel has thermal insulation and a dirt barrier to protect the wearer, while having breathability for comfort. Moreover, wearing apparel made of the laminate material of the present invention has opacity not otherwise achievable in lightweight knits. In addition, a two-web laminate according to the present invention, used as wearing apparel, with the bonded nonwoven elastomeric web next to the skin, can provide a soft suede-like feel for comfort.

In the following are specific examples of laminate materials according to the present invention. Also set forth, for each of these examples, are various properties of the laminate materials. For the various properties of the sample materials, the following test methods were utilized:
Basis weight - FTMS-191A Method 5041
Grab tensile - FTMS-191A Method 5100
Trap tear - FTMS-191A Method 3136
Mullen Burst-FTMS-191A Method 5122

Opacity was determined on a Hunter Color Difference Meter model D25-9 colorimeter and a standard CIE source C (simulated overcast sky daylight) using the contrast-ratio method. The contrast ratio is determined by measuring the reflectance of afabric when combined with a white standard instrument calibrating tile (available from Hunter Associates Laboratory, Reston, Virginia) and then measuring the reflectance of the same fabric when combined with a black standard instrument calibrating tile. The ratio between the measured reflectances is expressed as the contrast ratio.

Bulk is determined using an Ames thickness tester model 3223 with a 12.7 x 12.7 cm (5x5 inch) foot. Thickness was measured at a pressure of 182 grams.

A typical grab tensile cycle test procedure is set forth in the following. The samples were cycled on an Instrom M model 1122 Universal Testing Instrument (constant rate of extension tester) with Microcon II-50KG load cell. Chart and cross head speeds were set for 50.8 cm (20 inches) per minute and the unit was zeroed, balanced and calibrated according to the standard procedure. The positive stop for a sample is determined using a graph of stress versus strain measured for that sample using FTMS-191A method 500. The positive stop is defined as the point of intersection between a line tangent to the initial portion of the stress-strain curve near the origin and a line tangent to the least slope of the stress-strain c urve. The maximum elongation limit for the cycle length was set at a distance determined to be the measured Peak Elongation or Positive Stop from the grab _tensile tests. The samples were cycled to the specified cycle length four times, and on the fifth cycle, the sample was taken to the maximum elongation and held for 1 minute. The peak load was measured on the fifth cycle after being held at maximum elongation for one minute. The set is defined as a ratio of th e increase in length of the sample after a cycle divided by the maximum stretch during cycling. Permanent set is expressed as a percentage, that is, [(final sample length minus initial sample length)/(maximum stretch during cycling minus initial sample length)] x 100. Permanent set is related to recovery by the expression [permanent set = 100% minus recovery] when recovery is expressed as a percentage.

### EXAMPLE 1

A rib knit laminated to a nonwoven elastomeric Arnitel* web, forming a laminate according to the present invention, was provided. The laminate using a nonwoven adhesive web to provide the bonding between webs. Specifics of the webs are as follows,
- Rib Knit:: Yams - Continuous filament textured polyester Structure - 22 loops per inch Basis weight - 50.865 g/m² (1.5 ounces per square yard)
- Nonwoven Adhesive Web:: Nonwoven type - Meltblown Polymer - Elvax® (by E. I. DuPont De Nemours & Co.), an ethylene vinyl acetate Basis weight - 20.346 g/m² (0.6 ounces per square yard)
- Nonwoven Elastomeric Web:: Nonwoven type - Meltblown Polymer - Arnitel® EM 400, (by Akzo Plastics of Arnhem, Holland), a copolyether ester Basis weight - 32.215 g/m² (0.95 ounces per square yard)

The laminate material had properties as set forth in the following Table 1.

**TABLE 1**

| TEST | KNIT | ADH WEB | EL WEB | SUM OR WEIGHTED TOTAL | CAL. TOTAL | LAM. TOTAL |
|---|---|---|---|---|---|---|
| Code: | 6.0 | 4.0 | 1.0 | Sum | 13.0 | 13.0 |
| | | | | | | |
| Basis Weight | 50.865 | 20.346 | 33.91 | Sum | 105.12 | 115.29 |
| [g/m²](OSY) | (1.5) | (0.6) | (1.0) | | (3.1) | (3.4) |
| | | | | | | |
| 1-cycle CD Peak Load | 0.091 | 0.136 | 1.19 | Sum | 1.407 | 2.542 |
| [kg] (LBS) | (0.2) | (0.3) | (2.6) | | (3.1) | (5.6) |
| | | | | | | |
| 5-cycle CD Peak Load | 0.091 | 0.136 | 1.044 | Sum | 1.314 | 1.544 |
| [kg] (LBS) | (0.2) | (0.3) | (2.3) | | (2.9) | (3.4) |
| | | | | | | |
| 5-cycle CD % Set | 4.4 | 38.0 | 173.0 | | | 52.0 |
| | | | | | | |
| Grab Tensile MD Peak Elong. | 2.54 | 13.72 | 26.92 | | | 4.57 |
| [cm] (INS) | (1.0) | (5.4) | (10.6) | | | (1.8) |
| | | | | | | |
| Grab Tensile CD Peak Elong. | 22.86 | 11.68 | 31.24 | | | 28.45 |
| [cm] (INS) | (9.0) | (4.6) | (12.3) | | | (11.2) |
| | | | | | | |
| Trap Tear MD | 19.70 | 0.181 | 0.045 | Sum | 19.93 | 10.62 |
| [kg] (LBS) | (43.4) | (0.4) | (0.1) | | (43.9) | (23.4) |
| | | | | | | |
| Trap Tear CD | 0.817 | 0.045 | 0.636 | Sum | 1.498 | 10.17 |
| [kg] (LBS) | (1.8) | (0.1) | (1.4) | | (3.3) | (22.4) |
| | | | | | | |
| Mullen Burst | 38.86 | 4.54 | 4.86 | Sum | 48.26 | 42.22 |
| [kg] (LBS) | (85.6) | (10.0) | (10.7) | | (106.3) | (93.0) |
| | | | | | | |
| Opacity % | 27.8 | 16.1 | 44.5 | | | 62.1 |
| Bulk | 0.02 | 0.01 | 0.01 | | | 0.03 |

### EXAMPLE 2

A tricot knit laminated to a nonwoven elastomeric Estane® web, forming a laminate according to the present invention, was provided. The laminate used a nonwoven adhesive web to provide the bonding between webs. Specifics of the webs are as follows:
- Tricot Knit:: Yarns -- continuous filament Nylon Structure -- 18 loops per inch Basis weight -- 20.346 g/m² (0.6 ounces per square yard)
- Nonwoven Adhesive Web:: Nonwoven type -- Meltblown Polymer -- Elvax® (by E.I. DuPont De Nemours & Co.), an ethylene vinyl acetate Basis weight -- 20.346 g/m² (0.6 ounces per square yard)
- Nonwoven Elastomeric Web:: Nonwoven type - Meltblown Polymer -- Estane® 58887 (by B.F. Goodrich & Co.), a copolymer Urethane Basis weight- 47.47 g/m² (1.4 ounces per square yard)

Properties of the laminate material of Example 2 are shown in Table 2.

**TABLE 2**

| TEST | KNIT | ADH WEB | EL WEB | SUM OR WEIGHTED TOTAL | CAL. TOTAL | LAM. TOTAL |
|---|---|---|---|---|---|---|
| Code: | 3.0 | 4.0 | 3.0 | Sum | 10.0 | 10.0 |
| | | | | | | |
| Basis Weight | 20.346 | 20.346 | 47.47 | Sum | 88.166 | 88.166 |
| [g/m²](OSY) | (0.6) | (0.6) | (1.4) | | (2.6) | (2.6) |
| | | | | | | |
| 1-cycle CD Peak Load | 0.363 | 0.136 | 0.771 | Sum | 1.27 | 1.498 |
| [kg] (LBS) | (0.8) | (0.3) | (1.7) | | (2.8) | (3.3) |
| | | | | | | |
| 5-cycle CD Peak Load | 0.227 | 0.136 | 0.636 | Sum | 0.999 | 1.544 |
| [kg] (LBS) | (0.5) | (0.3) | (1.4) | | (2.2) | (3.4) |
| | | | | | | |
| 5-cycle CD % Set | 21.5 | 38.0 | 14.5 | | | 10.5 |
| | | | | | | |
| Grab Tensile MD Peak Elong. | 2.79 | 13.72 | 15.24 | | | 2.79 |
| [cm] (INS) | (1.1) | (5.4) | (6.0) | | | (1.1) |
| | | | | | | |
| Grab Tensile CD Peak Elong. | 8.38 | 11.68 | 10.92 | | | 8.64 |
| [cm] (INS) | (3.3) | (4.6) | (4.3) | | | (3.4) |
| | | | | | | |
| Trap Tear MD | 3.86 | 0.181 | 0.363 | Sum | 4.4 | 3.814 |
| [kg] (LBS) | (8.5) | (0.4) | (0.8) | | (9.7) | (8.4) |
| | | | | | | |
| Trap Tear CD | 2.497 | 0.045 | 0.681 | Sum | 3.22 | 3.45 |
| [kg] (LBS) | (5.5) | (0.1) | (1.5) | | (7.1) | (7.6) |
| | | | | | | |
| Mullen Burst | 19.20 | 4.54 | 5.13 | Sum | 28.87 | 21.43 |
| [kg] (LBS) | (42.3) | (10.0) | (11.3) | | (63.6) | (47.2) |
| | | | | | | |
| Opacity % | 12.7 | 16.1 | 51.0 | | | 55.6 |
| Bulk | 0.01 | 0.01 | 0.01 | | | 0.03 |

### EXAMPLE 3

A woven web laminated to a nonwoven elastormeric Arnitel® web, forming a laminate according to the present invention, was provided. The laminate used a nonwoven adhesive web to provide the bonding beween the webs. Specifics of the webs are as follows:
- Woven:: Yams -- Spun staple yarns, 50% polyester and 50% cotton Structure -- Plain weave, 32 x 32 yams per inch Basis weight -- 81.384 g/m² (2.4 ounces per square yard)
- Nonwoven Adhesive Web:: Nonwoven type -- meltblown Polymer -- Elvax® (by E.I. DuPont De Nemours & Co.), an ethylene vinyl acetate Basis weight -- 20.346 g/m² (0.6 ounces per square yard)
- Nonwoven Elastomeric Web:: Nonwoven type - Meltblown Polymer - Arnitel® EM 400 (by Akzo Plastics of Arnhem, Holland), a copolyether ester Basis weight - 32.215 g/m² (0.95 ounces per square yard)

Properties of the laminated material of Example 3 are shown in Table 3.

**TABLE 3**

| TEST | WOVEN | ADH WEB | EL WEB | SUM OR WEIGHTED TOTAL | CAL. TOTAL | LAM. TOTAL |
|---|---|---|---|---|---|---|
| Code: | 8.0 | 4.0 | 1.0 | | 14.0 | 14.0 |
| | | | | | | |
| Basis Weight | 81.384 | 20.346 | 33.91 | Sum | 135.64 | 135.64 |
| [g/m²] (OSY) | (2.4) | (0.6) | (1.0) | | (4.0) | (4.0) |
| | | | | | | |
| 1-cycle CD Peak Load | 0.363 | 0.136 | 1.18 | Sum | 1.68 | 1.725 |
| [kg] (LBS) | (0.8) | (0.3) | (2.6) | | (3.7) | (3.8) |
| | | | | | | |
| 5-cycle CD Peak Load | 0.272 | 0.136 | 1.044 | Sum | 1.453 | 1.589 |
| [kg] (LBS) | (0.6) | (0.3) | (2.3) | | (3.2) | (3.5) |
| | | | | | | |
| 5-cycle CD % Set | 3.8 | 38.0 | 173.0 | Sum | | 3.5 |
| | | | | | | |
| Grab Tensile MD Peak Elong. | 3.56 | 13.72 | 26.92 | | | NA |
| [cm] (INS) | (1.4) | (5.4) | (10.6) | | | |
| | | | | | | |
| Grab Tensile CD Peak Elong. | 3.3 | 11.68 | 31.24 | | | 5.08 |
| [cm] (INS) | (1.3) | (4.6) | (12.3) | | | (2.0) |
| | | | | | | |
| Trap Tear MD | 17.388 | 0.181 | 0.045 | Sum | 17.62 | 14.62 |
| [kg] (LBS) | (38.3) | (0.4) | (0.1) | | (38.8) | (32.2) |
| | | | | | | |
| Trap Tear CD | 17.62 | 0.045 | 0.636 | Sum | 17.98 | 34.23 |
| [kg] (LBS) | (38.8) | (0.1) | (1.4) | | (39.6) | (75.4) |
| | | | | | | |
| Mullen Burst | 82.45 | 4.54 | 4.86 | Sum | 91.84 | 86.80 |
| [kg] (LBS) | (181.6) | (10.0) | (10.7) | | (202.3) | (191.2) |
| | | | | | | |
| Opacity % | 34.5 | 16.1 | 51.0 | | | 67.1 |
| Bulk | 0.02 | 0.01 | 0.01 | | | 0.02 |

As seen in the foregoing examples, the laminate material of the present invention, including the nonwoven elastomeric web, provides improved properties as compared with the textile material itself.

Thus, the laminate material of the present invention, including the nonwoven elastomeric web and the textile web, achieves the advantages of the textile web, while also achieving improved properties, such as opacity, due to the nonwoven elastomeric web. Moreover, the laminate materials of the foregoing Examples have the following further improvements in tensile properties:
(1) The laminate material is stronger than the sum of the components using the Grab Tensile Peak Load Test;
(2) The overall cross-direction elongation of the laminate material was improved without effecting machine direction elongation; and
(3) The laminate material changed direction of tear strength, the individual components having a machine direction tear strength greater than that of the cross-direction, while the laminate material had a stronger cross-direction tear strength than that in the machine direction.

The laminate according to the present invention has improved breathability, as compared to textile laminates including an elastic film. Moreover, the laminate according to the present invention, including the elastomeric nonwoven web, imparts snag resistance to knits that would otherwise be prone to snagging. Moreover, the laminates according to the present invention can be produced in lower basis weights than wovens or knits that contain elastic yarns, due to the denier of elastic yarns. Furthermore, the laminates according to the present invention can be produced at a lower cost than wovens or knits that contain elastic yarns, due to the processing difficulties of elastic yams. Moreover, the laminates of the present invention, having an exposed elastomeric web, achieve an anti-skid surface. Moreover, the laminate processing according to the present invention provides techniques for adding elasticity to available textiles, efficiently and at a relatively low cost.

Moreover, the laminates of the present invention have a desirable power stretch recovery. That is, the laminates of textiles and nonwoven elastomeric webs have a retraction force that is more desirable than the retraction force of textiles which do not contain elastic yams, threads rubberized film backings or coatings. One useful gauge of this retraction force is the peak load measured after a material sample has been cycled several times to its maximum elongation and then held at that maximum elongation for about one minute. Materials with a particularly useful retraction force will have a higher measured peak load after such cycle testing than materials with a poor retraction force.

As can be seen from the results of the grab tensile cycle tests reported in Tables 1-3 and, in particular, the measured 5-cycle bias Peak Load, textile materials such as, for example, rib knits, tricot knits, and plain weave materials have a low retraction force (i.e., a low measured 5-cycle bias Peak Load) when compared to the laminates of the present invention.

## Claims

1. A laminate material having stretchability and recovery, comprising a first web (1) of a material selected from the group consisting of a woven material, a knit material and a scrim material, joined to a nonwoven elastomeric web (2) of fibers; the laminate material being free of an elastomeric film, said first web being substantially flat when the nonwoven web is unstretched, the nonwoven elastomeric web being a bonded nonwoven elastomeric web and providing recovery to the laminate,
said fibers being made from a material selected from the group consisting of elastomeric urethane polymer; a copolymer of ethylene and at least one vinyl monomer; block copolymers having two blocks, which alternate with each other; and A-B-A' block copolymers, where A and A' may be the same or different end blocks and each is a thermoplastic polymer which contains a styrenic moiety, and B is an elastomeric polymer midblock,
**characterized in that** the bonding between said webs consists of adhesive bonding between the first web (1) and the bonded nonwoven elastomeric web (2).

2. A laminate material according to claim 1, wherein the bonded nonwoven elastomeric web (2) is a web of meltblown elastomeric fibers.

3. A laminate material according to claim 1 or 2, wherein the first web (1) is made of a knit material.

4. A laminate material according to claim 3, wherein the knit material is stretchable but has substantially no recovery, the web (2) of meltblown elastomeric fibers providing recovery for the laminate material.

5. A laminate material according to one of the preceding claims, wherein the bonded nonwoven elastomeric web (2) has omni-directional stretch and recovery.

6. A laminate material according to one of claims 2 to 5, wherein the meltblown elastomeric fibers range from 0.5 to 100 µm in diameter, preferably to from 0.5 to 20 µm in diameter.

7. A laminate material according to one of the preceding claims, wherein the bonded nonwoven elastomeric web (2) has a basis weight of 6.782 to 203.46 g/m² (0.20 to 6.0 oz/yd²).

8. A laminate material according to one of claims 2 to 7, wherein the first web is made of a knit material, and the bonded nonwoven elastomeric web has a basis weight of 10.173 to 101.73 g/m² (0.30 to 3.0 oz/yd²).

9. A laminate material according to one of the preceding claims, wherein the bonded nonwoven elastomeric web (2) is a composite web.

10. A laminate material of one of claims 2 to 9, wherein the bonded nonwoven web (2) of meltblown elastomeric fibers is a composite web made of [1] a mixture of two or more different fibers or [2] a mixture of fibers and particulate materials, with at least one of the fibers being elastomeric meltblown fibers.

11. A laminate material according to one of the preceding claims, wherein the adhesive bonding is accomplished by an aqueous-based adhesive, a solvent based adhesive, a thermoplastic adhesive, or an adhesive web.

12. A laminate material according to one of the preceding claims, wherein the laminate material includes, in addition to the first web and the bonded nonwoven elastomeric web, a second web of a material selected from the group consisting of a woven material, a knit material and a scrim material, the bonded nonwoven elastomeric web being sandwiched between the first and second webs.

13. A laminate material according to one of the preceding claims, wherein the laminate material includes at least one further web, of a material selected from the group consisting of a woven material, a knit material and a scrim material, the bonded nonwoven elastomeric web being buried among the first web and the at least one further web.

14. A laminate material according to one of claims 1 to 12, wherein the bonded nonwoven elastomeric web is exposed in the laminate material.

15. A laminate material according to claim 1, wherein the first web is made of a knit material, and the bonded nonwoven elastomeric web is made of a material selected from the group consisting of elastic copolyetherester, elastic urethane polymer; a copolymer of ethylene and at least one vinyl monomer; block copolymers having two blocks, which alternate with each other; and/or A-B-A' block copolymers, where A and A' may be the same or different end blocks and each is a thermoplastic polymer which contains a styrenic moiety, and B is an elastomeric polymer midblock.

16. A laminate material according to one of the preceding claims, wherein the laminate material is a fitted pad, preferably a mattress pad or a table pad.

17. A laminate material according to claim 16, wherein the fitted pad is adapted to be placed on an article, with the bonded nonwoven elastomeric web adjacent the article.

18. A laminate material according to one of claims 1 to 17, wherein the laminate material is upholstery.

19. A laminate material according to claim 18, wherein the bonded nonwoven elastomeric web of the upholstery is adjacent an article covered by the upholstery.

20. A laminate material according to claims 18 or 19, wherein the upholstery is a slip cover.

21. A laminate material according to one of claims 1 to 16, wherein the laminate material is a cover for a wall or partition panel, or wherein the laminate material is wearing apparel in which preferably the bonded nonwoven elastomeric web of the laminate material is adapted to be adjacent the skin of the wearer of the wearing apparel.

22. A laminate material according to claim 21, wherein the first web is made of a knit material.

23. A process for forming a laminate material according to one of the preceding claims, having stretch and recovery, and having a flat surface when the laminate is in the unstretched state, the laminate material being free of an elastomeric film, comprising the steps of:
providing a first web of a material selected from the group consisting of a knit material, a woven material and a scrim material, proximate to a bonded nonwoven elastomeric web of melt-blown fibers; and
joining the first web to the bonded nonwoven elastomeric web of meltblown fibers such that, when the joined first web and bonded nonwoven elastomeric web of meltblown fibers are not stretched, the first web is substantially flat, the joining being performed without an elastomeric film such that the laminate material is free of an elastomeric film, said fibers being formed from a material selected from the group consisting of elastomeric urethane polymer; a copolymer of ethylene and at least one vinyl monomer; block copolymers having two blocks, which alternate with each other; and A-B-A' block copolymers, where A and A' may be the same or different end blocks and each is a thermoplastic polymer which contains a styrenic moiety, and B is an elastomeric polymer midblock,
**characterized in that** the bonding of said webs consists of adhesive bonding between the first web and the bonded nonwoven elastomeric web, whereby the adhesive bonding bonds the first web to the bonded nonwoven elastomeric web in the joining step.

24. The process according to claim 23, wherein the bonded nonwoven elastomeric web is a web of meltblown elastomeric fibers.

25. The process according to claim 23 or 24, wherein the first web is made of a knit material.

26. The process according to one of claims 24 or 25, wherein the web of meltblown elastomeric fibers is a composite web made of [1] a mixture of two or more different fibers or [2] a mixture of fibers and particulate materials, with at least one of the fibers being elastomeric meltblown fibers.

27. The process according to one of claims 23 to 26 wherein the bonded nonwoven elastomeric web is a composite web.

28. The process according to one of claims 23 to 27, wherein the bonded nonwoven elastomeric web is made of a material selected from the group consisting of elastic copolyetherester; elastic urethane polymer; a copolymer of ethylene and at least one vinyl monomer; block copolymers having two blocks, which alternate with each other, and/or A-B-A' block copolymers, where A and A' may be the same or different end blocks and each is a thermoplastic polymer which contains a styrenic moiety, and B is an elastomeric polymer midblock.

29. The process according to one of claims 23 to 28, wherein the bonded nonwoven elastomeric web is substantially unstretched during said joining.

30. The process according to one of claims 23 to 28, wherein the bonded nonwoven elastomeric web is partially stretched during said joining, the partial stretching not being sufficient to cause gathering of the first web, after joining, upon removal of the partial stretching from the bonded nonwoven elastomeric web.

31. The process according to claim 23, wherein the adhesive bonding is accomplished by an aqueous adhesive, a solvent-based adhesive or a thermoplastic adhesive, or an adhesive web.

32. The process according to one of claims 23 to 31, wherein, in the providing step, at least one further web is provided proximate to at least one of the first web and the bonded nonwoven elastomeric web and, in the joining step, said at least one further web is joined to the first web and the bonded nonwoven elastomeric web, wherein said at least one further web is selected from the group consisting of a nonwoven elastomeric web, a web of scrim material, a web of woven material and a web of knit material.

33. Use of the laminate material of one of claims 1 to 15 or formed according to one of claims 23 to 32 as a fitted pad, preferably a mattress or table pad, as a material of upholstery, as a slip cover, as a cover for a wall or partition panel, or as wearing apparel.

## Patentansprüche

1. Laminatmaterial, das Dehnbarkeit sowie Rückbildung aufweist, mit einer ersten Bahn (1) aus einem Material ausgewählt aus der Gruppe bestehend aus einem gewebten Material, einem gewirkten Material und einem mullähnlichen Material, die mit einer Vlieselastomerbahn (2) aus Fasern verbunden ist; wobei das Laminatmaterial frei von einem Elastomerfilm ist, die erste Bahn im wesentlichen flach ist, wenn die Vliesbahn nicht gedehnt ist, und die Vlieselastomerbahn eine gebondete Vlieselastomerbahn ist und dem Laminat Rückbildung verleiht,
wobei die Fasern aus einem Material ausgewählt aus der Gruppe bestehend aus einem elastomeren Urethanpolymer; einem Copolymer von Ethylen und mindestens einem Vinylmonomer; Blockcopolymeren mit zwei Blöcken, welche miteinander alternieren; und A-B-A'-Blockcopolymeren hergestellt sind, wobei A und A' gleiche oder verschiedene Endblöcke sein können und es sich jeweils um ein thermoplastisches Polymer mit einem Styrolanteil handelt, und B ein Elastomerpolymermittelblock ist,
**dadurch gekennzeichnet, daß** das Bondieren der Bahnen aus Klebebondieren zwischen der ersten Bahn (1) und der gebondeten Vlieselastomerbahn (2) besteht.

2. Laminatmaterial gemäß Anspruch 1, bei dem es sich bei der geborideten Vlieselastomerbahn (2) um eine Bahn aus schmelzgeblasenen Elastomerfasern handelt.

3. Laminatmaterial gemäß Anspruch 1 oder 2, bei dem die erste Bahn (1) aus einem gewirkten Material hergestellt ist.

4. Laminatmaterial gemäß Anspruch 3, bei dem das gewirkte Material dehnbar ist, jedoch im wesentlichen keine Rückbildung aufweist, wobei die Bahn (2) aus schmelzgeblasenen Elastomerfasern dem Laminatmaterial Rückbildung verleiht.

5. Laminatmaterial gemäß einem der vorhergehenden Ansprüche, bei dem die gebondete Vlieselastomerbahn (2) eine in alle Richtungen gehende Dehnung und Rückbildung aufweist.

6. Laminatmaterial gemäß einem der Ansprüche 2 bis 5, bei dem die schmelzgeblasenen Elastomerfasern einen Durchmesser im Bereich von 0,5 bis 100 µm, vorzugsweise von 0,5 bis 20 µm, aufweisen.

7. Laminatmaterial gemäß einem der vorhergehenden Ansprüche, bei dem die gebondete Vlieselastomerbahn (2) ein Flächengewicht von 6,782 bis 203,46 g/m² (0,20 bis 6,0 Unzen/yd²) aufweist.

8. Laminatmaterial gemäß einem der Ansprüche 2 bis 7, bei dem die erste Bahn aus einem gewirkten Material hergestellt ist und die gebondete Vlieselastomerbahn ein Flächengewicht von 10,173 bis 101,73 g/m² (0,30 bis 3,0 Unzen/yd²) aufweist.

9. Laminatmaterial gemäß einem der vorhergehenden Ansprüche, bei dem die gebondete Vlieselastomerbahn (2) eine Verbundbahn ist.

10. Laminatmaterial gemäß einem der Ansprüche 2 bis 9, bei dem die gebondete Vliesbahn (2) aus schmelzgeblasenen Elastomerfasern eine Verbundbahn ist, welche aus [1] einer Mischung aus zwei oder mehr verschiedenen Fasern oder [2] einer Mischung aus Fasern und partikulären Materialien hergestellt ist, wobei es sich bei mindestens einer der Fasern um schmelzgeblasene Elastomerfasern handelt.

11. Laminatmaterial gemäß einem der vorhergehenden Ansprüche, bei dem das Klebebondieren durch ein Klebemittel auf Wasserbasis, ein Klebemittel auf Lösungsbasis, ein thermoplastisches Klebemittel oder eine klebende Bahn ausgeführt wird.

12. Laminatmaterial gemäß einem der vorhergehenden Ansprüche, bei dem das Laminatmaterial zusätzlich zu der ersten Bahn und der gebondeten Vlieselastomerbahn eine zweite Bahn aus einem Material ausgewählt aus der Gruppe bestehend aus einem gewebten Material, einem gewirkten Material und einem mullähnlichen Material aufweist, wobei die gebondete Vlieselastomerbahn zwischen der ersten und der zweiten Bahn angeordnet ist.

13. Laminatmaterial gemäß einem der vorhergehenden Ansprüche, bei dem das Laminatmaterial mindestens eine weitere Bahn aus einem Material ausgewählt aus der Gruppe bestehend aus einem gewebten Material, einem gewirkten Material und einem mullähnlichen Material aufweist, wobei die gebondete Vlieselastomerbahn zwischen der ersten Bahn und der mindestens einen weiteren Bahn liegt.

14. Laminatmaterial gemäß einem der Ansprüche 1 bis 12, bei dem die gebondete Vlieselastomerbahn in dem Laminatmaterial freiliegt.

15. Laminatmaterial gemäß Anspruch 1, bei dem die erste Bahn aus einem gewirkten Material hergestellt ist und die gebondete Vlieselastomerbahn aus einem Material ausgewählt aus der Gruppe bestehend aus elastischem Copolyetherester, elastischem Urethanpolymer; einem Copolymer von Ethylen und mindestens einem Vinylmonomer; Blockcopolymeren mit zwei Blöcken, welche miteinander alternieren; und/oder A-B-A'-Blockcopolymeren hergestellt ist, wobei A und A' gleiche oder verschiedene Endblöcke sein können und es sich jeweils um ein thermoplastisches Polymer mit einem Styrolanteil handelt, und B ein Elastomerpolymermittelblock ist.

16. Laminatmaterial gemäß einem der vorhergehenden Ansprüche, bei dem das Laminatmaterial eine angepaßte Auflage, vorzugsweise eine Matratzenauflage oder eine Tischauflage ist.

17. Laminatmaterial gemäß Anspruch 16, bei dem die angepaßte Auflage zur Plazierung auf einen Artikel ausgerichtet ist, wobei die gebondete Vlieselastomerbahn zu dem Artikel benachbart ist.

18. Laminatmaterial gemäß einem der Ansprüche 1 bis 17, bei dem es sich bei dem Laminatmaterial um Polstermaterial handelt.

19. Laminatmaterial gemäß Anspruch 18, bei dem die gebondete Vlieselastomerbahn des Polstermaterials zu einem von dem Polstermaterial bedeckten Artikel benachbart ist.

20. Laminatmaterial gemäß Anspruch 18 oder 19, bei dem es sich bei dem Polstermaterial um einen Schonbezug handelt.

21. Laminatmaterial gemäß einem der Ansprüche 1 bis 16, bei dem das Laminatmaterial eine Abdeckung für eine Wand oder eine Abtrennung ist, oder wobei es sich bei dem Laminatmaterial um Bekleidung handelt, wobei vorzugsweise die gebondete Vlieselastomerbahn des Laminatmaterials darauf ausgerichtet ist, neben der Haut des Trägers der Bekleidung zu sein.

22. Laminatmaterial gemäß Anspruch 21, bei dem die erste Bahn aus einem gewirkten Material hergestellt ist.

23. Verfahren zur Herstellung eines Laminatmaterials, gemäß einem der vorhergehenden Ansprüche, mit Dehnbarkeit sowie Rückbildung und mit einer flachen Oberfläche, wenn das Laminat in nicht gedehntem Zustand ist, wobei das Laminatmaterial frei von einem Elastomerfilm ist, mit folgenden Schritten:
Bereitstellung einer ersten Bahn aus einem Material ausgewählt aus der Gruppe bestehend aus einem gewirkten Material, einem gewebten Material und einem mullähnlichen Material benachbart zu mindestens einer gebondeten Vlieselastomerbahn aus schmelzgeblasenen Fasern; und
Verbinden der ersten Bahn mit der gebondeten Vlieselastomerbahn aus schmelzgeblasenen Fasern, so daß, wenn die erste Bahn und die gebondete Vlieselastomerbahn aus schmelzgeblasen Fasern, die miteinander verbundenen sind, nicht gedehnt sind, die erste Bahn im wesentlichen flach ist, wobei das Verbinden ohne Elastomerfilm durchgeführt wird, so daß das Laminatmaterial frei von Elastomerfilm ist,
wobei die Fasern aus einem Material ausgewählt aus der Gruppe bestehend aus einem elastomeren Urethanpolymer; einem Copolymer von Ethylen und mindestens einem Vinylmonomer; Blockcopolymeren mit zwei Blöcken, welche miteinander alternieren; und AB-A'-Blockcopolymeren hergestellt sind, wobei A und A' gleiche oder verschiedene Endblöcke sein können und es sich jeweils um ein thermoplastisches Polymer mit einem Styrolanteil handelt, und B ein Elastomerpolymermittelblock ist,
**dadurch gekennzeichnet, daß** das Bondieren der Bahnen aus Klebebondieren zwischen der ersten Bahn (1) und der geborideten Vlieselastomerbahn (2) besteht, wodurch das Klebebondieren die erste Bahn mit der gebondeten Vlieselastomerbahn in den Verbindeschritt boridiert.

24. Verfahren gemäß Anspruch 23, bei dem die gebondete Vlieselastomerbahn eine Bahn aus schmelzgeblasenen Elastomerfasern ist.

25. Verfahren gemäß Anspruch 23 oder 24, bei dem die erste Bahn aus einem gewirkten Material hergestellt ist.

26. Verfahren gemäß einem der Ansprüche 24 oder 25, bei dem die Bahn aus schmelzgeblasenen Elastomerfasern eine Verbundbahn ist, welche aus [1] einer Mischung aus zwei oder mehr verschiedenen Fasern oder [2] einer Mischung aus Fasern und partikulären Materialien hergestellt ist, wobei es sich bei mindestens einer der Fasern um schmelzgeblasene Elastomerfasern handelt.

27. Verfahren gemäß einem der Ansprüche 23 bis 26, bei dem die gebondete Vlieselastomerbahn eine Verbundbahn ist.

28. Verfahren gemäß einem der Ansprüche 23 bis 27, bei dem die gebondete Vlieselastomerbahn aus einem Material ausgewählt aus der Gruppe bestehend aus elastomerem Copolyetherester, elastischem Urethanpolymer; einem Copolymer von Ethylen und mindestens einem Vinylmonomer; Blockcopolymeren mit zwei Blöcken, welche miteinander alternieren; und/oder
A-B-A'-Blockcopolymeren hergestellt ist, wobei A und A' gleiche oder verschiedene Endblöcke sein können und es sich jeweils um ein thermoplastisches Polymer mit einem Styrolanteil handelt, und B ein Elastomerpolymermittelblock ist.

29. Verfahren gemäß einem der Ansprüche 23 bis 28, bei dem die gebondete Vlieselastomerbahn während der Verbindung im wesentlichen nicht gedehnt ist.

30. Verfahren gemäß einem der Ansprüche 23 bis 28, bei dem die geboridete Vlieselastomerbahn während der Verbindung teilweise gedehnt ist, wobei die teilweise Dehnung nicht ausreicht, um ein Zusammenziehen der ersten Bahn zu bewirken, nachdem die Verbindung erfolgt ist, wenn die teilweise Dehnung von der gebondeten Vlieselastomerbahn gelöst wird.

31. Verfahren gemäß Anspruch 23, bei dem das Klebebondieren durch ein Klebemittel auf Wasserbasis, ein Klebemittel auf Lösungsbasis, ein thermoplastisches Klebemittel oder eine klebende Bahn ausgeführt wird.

32. Verfahren gemäß einem der Ansprüche 23 bis 31, bei dem in dem Schritt der Bereitstellung mindestens eine weitere Bahn benachbart zu mindestens einer Bahn ausgewählt aus der ersten Bahn und der gebondeten Vlieselastomerbahn zur Verfügung gestellt wird, und in dem Verbindungsschritt die mindestens eine weitere Bahn mit der ersten Bahn und der gebondeten Vlieselastomerbahn verbunden wird, wobei die mindestens eine weitere Bahn aus der Gruppe bestehend aus einer Vlieselastomerbahn, einer Bahn aus mullähnlichem Material, einer Bahn aus gewebtem Material und einer Bahn aus gewirktem Material ausgewählt ist.

33. Verwendung des Laminatmaterials gemäß einem der Ansprüche 1 bis 15, oder das gemäß einem der Ansprüche 23 bis 32 gebildet ist, als angepaßte Auflage, vorzugsweise Matratzenauflage oder Tischauflage, als Polstermaterial, als Schonbezug, als Abdeckung für eine Wand oder Abtrennung, oder als Bekleidung.

## Revendications

1. Matériau stratifié apte à l'extension et à la récupération, comprenant une première nappe (1) d'un matériau choisi dans le groupe consistant en un matériau tissé, un matériau à mailles et un matériau en canevas léger, réunie à une nappe (2) de fibres élastomère non tissée ; le matériau stratifié étant dépourvu de film élastomère, ladite première nappe étant sensiblement plate lorsque la nappe non tissée n'est pas étirée, la nappe élastomère non tissée étant une nappe élastomère non tissée liée et conférant de la récupération au stratifié,
lesdites fibres étant faites d'un matériau choisi dans le groupe consistant en un polymère élastomère d'uréthane ; un copolymère d'éthylène et d'au moins un monomère vinylique ; des copolymères séquencés ayant deux séquences qui alternent l'une avec l'autre ; des copolymères séquencés A-B-A' où A et A' peuvent être des séquences terminales identiques ou différentes et chacune est un polymère thermoplastique qui contient un motif styrène, et B est une séquence intermédiaire polymère élastomère,
**caractérisé en ce que** la liaison entre lesdites nappes consiste en une liaison adhésive entre la première nappe (1) et la nappe élastomère non tissée, liée.

2. Matériau stratifié selon la revendication 1, dans lequel la nappe élastomère non tissée liée (2) est une nappe de fibres élastomères obtenues par fusion-soufflage.

3. Matériau stratifié selon la revendication 1 ou 2, dans lequel la première nappe (1) est faite d'un matériau à mailles.

4. Matériau stratifié selon la revendication 3, dans lequel le matériau à mailles est extensible mais est sensiblement dépourvu de récupération, la nappe (2) de fibres élastomères obtenues par fusion-soufflage conférant de la récupération au matériau stratifié.

5. Matériau stratifié selon l'une des revendications précédentes, dans lequel la nappe élastomère non tissée liée (2) a une aptitude à l'extension et à la récupération omnidirectionnelles.

6. Matériau stratifié selon l'une des revendications 2 à 5, dans lequel les fibres élastomères obtenues par fusion-soufflage ont un diamètre compris entre 0,5 et 100 µm, et de préférence entre 0,5 et 20 µm.

7. Matériau stratifié selon l'une des revendications précédentes, dans lequel la nappe élastomère non tissée liée (2) a un poids de base compris entre 6,782 et 203,46 g/m² (entre 0,20 et 6,0 onces/yard²).

8. Matériau stratifié selon l'une des revendications 2 à 7, dans lequel la première nappe est faite d'un matériau à mailles, et la nappe élastomère non tissée liée a un poids de base compris entre 10,173 et 101,73 g/m² (entre 0,30 et 3,0 onces/yard²).

9. Matériau stratifié selon l'une des revendications précédentes, dans lequel la nappe élastomère non tissée liée (2) est une nappe composite.

10. Matériau stratifié selon l'une des revendications 2 à 9, dans lequel la nappe non tissée liée (2) de fibres élastomères obtenues par fusion-soufflage est une nappe composite faite de [1] un mélange de deux fibres différentes ou davantage ou [2] un mélange de fibres et de matériaux en particules, l'une au moins des fibres étant une fibre élastomère obtenue par fusion-soufflage.

11. Matériau stratifié selon l'une des revendications précédentes, dans lequel la liaison adhésive est accomplie au moyen d'un adhésif à base aqueuse, un adhésif à base de solvant, un adhésif thermoplastique ou une nappe adhésive.

12. Matériau stratifié selon l'une des revendications précédentes, dans lequel le matériau stratifié comprend, en plus de la première nappe et de la nappe élastomère non tissée liée, une seconde nappe d'un matériau choisi dans le groupe consistant en un matériau tissé, un matériau à mailles et un matériau en canevas léger, la nappe élastomère non tissée liée étant prise en sandwich entre la première et la seconde nappes.

13. Matériau stratifié selon l'une des revendications précédentes, dans lequel le matériau stratifié comprend au moins une autre nappe d'un matériau choisi dans le groupe consistant en un matériau tissé, un matériau à mailles et un matériau en canevas léger, la nappe élastomère non tissée liée étant noyée parmi la première nappe et ladite au moins une autre nappe.

14. Matériau stratifié selon l'une des revendications 1 à 12, dans lequel la nappe élastomère non tissée liée est à découvert dans le matériau stratifié.

15. Matériau stratifié selon la revendication 1, dans lequel la première nappe est faite d'un matériau à mailles, et la nappe élastomère non tissée liée est faite d'un matériau choisi dans le groupe consistant en un copolyétherester élastique, un polymère d'uréthane élastique ; un copolymère d'éthylène et d'au moins un monomère vinylique ; des copolymères séquencés ayant deux séquences qui alternent l'une avec l'autre ; et/ou des copolymères séquencés A-B-A' où A et A' peuvent être des séquences terminales identiques ou différentes et chacune est un polymère thermoplastique qui contient un motif styrène, et B est une séquence intermédiaire polymère élastomère.

16. Matériau stratifié selon l'une des revendications précédentes, dans - lequel le matériau stratifié est un molleton ajusté, de préférence un molleton pour matelas ou un molleton pour table.

17. Matériau stratifié selon la revendication 16, dans lequel le molleton ajusté est adapté à être placé sur un article, avec la nappe élastomère non tissée liée adjacente à l'article.

18. Matériau stratifié selon l'une des revendications 1 à 17, qui constitue un capitonnage pour ameublement.

19. Matériau stratifié selon la revendication 21, dans lequel la nappe élastomère non tissée liée du capitonnage pour ameublement est adjacente à un article couvert par ledit capitonnage.

20. Matériau stratifié selon la revendication 18 ou 19, dans lequel le capitonnage pour ameublement revêt la forme d'une housse.

21. Matériau stratifié selon l'une des revendications 1 à 16, dans lequel ledit matériau stratifié forme produit de revêtement pour paroi ou cloison, ou dans lequel le matériau stratifié forme vêtement, la nappe élastomère non tissée liée du matériau stratifié étant, de préférence, adaptée à être adjacente à la peau du porteur du vêtement.

22. Matériau stratifié selon la revendication 21, dans lequel la première nappe est faite d'un matériau à mailles.

23. Procédé de formation d'un matériau stratifié selon l'une des revendications précédentes, ayant une aptitude à l'extension et à la récupération, et ayant une surface plate lorsque le stratifié est à l'état non étiré, le matériau stratifié étant dépourvu de film élastomère, ledit procédé comprenant les étapes suivantes :
la fourniture d'une première nappe d'un matériau choisi dans le groupe consistant en un matériau tissé, un matériau à mailles et un matériau en canevas léger, voisine d'au moins une nappe de fibres élastomère non tissée liée de fibres obtenues par fusion-soufflage ; et
la réunion de la première nappe à la nappe élastomère non tissée liée de fibres obtenues par fusion-soufflage de telle sorte que, lorsque la première nappe et la nappe élastomère non tissée liée de fibres obtenues par fusion-soufflage, se trouvant réunies, ne sont pas étirées, la première nappe est sensiblement plate, la réunion étant accomplie sans film élastomère, de telle sorte que le matériau stratifié est dépourvu de film élastomère, lesdites fibres étant formées d'un matériau choisi dans le groupe consistant en un polymère élastomère d'uréthane, un copolymère d'éthylène et d'au moins un monomère vinylique ; des copolymères séquencés ayant deux séquences qui alternent l'une avec l'autre ; les copolymères séquencés A-B-A' où A et A' sont des séquences terminales qui peuvent être identiques ou différentes, et chacune est un polymère thermoplastique qui contient un motif styrène, et B est une séquence intermédiaire polymère élastomère,
**caractérisé en ce que** la liaison desdites nappes consiste en une liaison adhésive entre la première nappe et la nappe élastomère non tissée liée, grâce à quoi la liaison adhésive lie la première nappe et la nappe élastomère non tissée liée, dans l'étape de liaison.

24. Procédé selon la revendication 23, dans lequel la nappe élastomère non tissée liée est une nappe de fibres élastomères obtenues par fusion-soufflage

25. Procédé selon la revendication 23 ou 24, dans lequel la première nappe est faite d'un matériau à mailles.

26. Procédé selon l'une des revendications 24 ou 25, dans lequel la nappe de fibres élastomères obtenues par fusion-soufflage est une nappe composite faite de [1] un mélange de deux fibres différentes ou davantage ou [2] un mélange de fibres et de matériaux en particules, l'une au moins des fibres étant une fibre obtenue par fusion-soufflage.

27. Procédé selon l'une des revendications 23 à 26, dans lequel la nappe élastomère non tissée liée est une nappe composite.

28. Procédé selon l'une des revendications 23 à 27, dans lequel la nappe élastomère non tissée liée est faite d'un matériau choisi dans le groupe consistant en un copolyétherester élastique ; un polymère d'uréthane élastique ; un copolymère d'éthylène et d'au moins un monomère vinylique ; des copolymères séquencés ayant deux séquences qui alternent l'une avec l'autre et/ou des copolymères séquencés A-B-A', où A et A' sont des séquences terminales qui peuvent être identiques ou différentes et chacune est un polymère thermoplastique qui contient un motif styrène, et B est une séquence intermédiaire polymère élastomère.

29. Procédé selon l'une des revendications 23 à 28, dans lequel la nappe élastomère non tissée liée est sensiblement non étirée pendant ladite réunion.

30. Procédé selon l'une des revendications 23 à 28, dans lequel la nappe élastomère non tissée liée est partiellement étirée pendant ladite réunion, l'extension partielle n'étant pas suffisante pour provoquer le fronçage de la première nappe, après la réunion, une fois que cesse l'extension partielle de la nappe élastomère non tissée liée.

31. Procédé selon la revendication 23, dans lequel la liaison adhésive est accomplie au moyen d'un adhésif aqueuse, un adhésif à base de solvant, un adhésif thermoplastique ou une nappe adhésive.

32. Procédé selon l'une des revendications 23 à 31, dans lequel, dans l'étape de fourniture, au moins une autre nappe est fournie au voisinage de l'une au moins de la première nappe et de la nappe élastomère non tissée liée et dans lequel, dans l'étape de réunion, ladite au moins une autre nappe est réunie à la première nappe et à la nappe élastomère non tissée liée, ladite au moins une autre nappe étant choisie dans le groupe consistant en une nappe élastomère non tissée, une nappe de matériau en canevas léger, une nappe de matériau tissé et une nappe de matériau à mailles.

33. Utilisation du matériau stratifié selon l'une des revendications 1 à 15, ou formé selon l'une des revendications 23 à 32 comme molleton ajusté, de préférence comme molleton pour matelas ou molleton pour table, comme capitonnage pour ameublement, comme housse, comme revêtement pour paroi ou cloison ou comme vêtement.
